# EUROPEAN PATENT APPLICATION

(11) **EP 0 870 562 A2**
(43) Date of publication of application: **14.10.1998**
(21) Application number: 98302162.7
(22) Date of filing: 23.03.1998
(51) Int. Cl.: B23C 5/08, B23C 3/12

(54) **Blade holding structure for rotary tool**

(30) Priority: 24.03.1997 JP 88835/97; 24.03.1997 JP 88836/97
(71) Applicant: Shoda Techtron Corporation, Hamamatsu-shi (JP)
(72) Inventor: Suzuki, Toshisada, c/o Shoda Techtron Corporation, Hamamatsu-shi (JP); Honda, Naonobu, Shoda Techtron Corporation, Hamamatsu-shi (JP)
(74) Representative: Eyles, Christopher Thomas

(57) **Abstract**

A rotary tool including a disc-like body having an axis of rotation and a plurality of circumferentially spaced, serrated portions each having opposed side faces bounded by a leading surface, a trailing surface and a top surface, said top surface being bounded by said leading and trailing surfaces. A radially extending recess is formed between the opposed side faces of each of the serrated portions and opening to both top and leading surfaces thereof. A blade insert is fitted in and fixed to the recess of each of the serrated portions and has an operating surface so that, when the disc-like body is rotated about the axis, a work can be machined by contact with the operating surface of the blade insert of each of the serraled portions.

## Description

### BACKGROUND OF THE INVENTION

This invention relates generally to a rotary tool and, more specifically, to a blade holding structure for a rotary tool for use in chamfering edges of a work or forming a groove on a surface of a work.

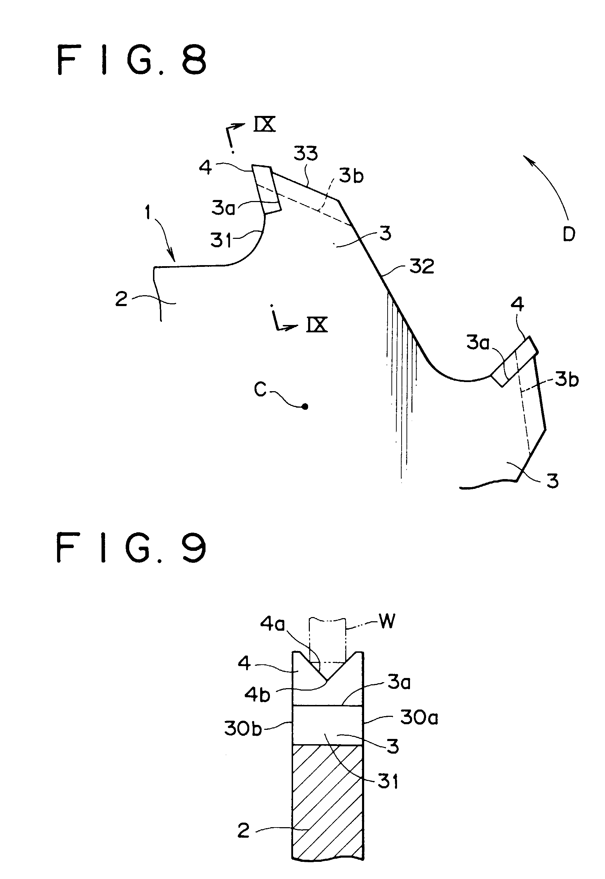

One known rotary tool for chamfering edges of a work is shown in Figs. 8 and 9, in which the reference numeral 1 denotes a disc-like body having an axis of rotation C and a plurality of circumferentially spaced, serrated portions 3 each having opposed side faces 30a and 30b bounded by a leading surface 31, a trailing surface 32 and a top surface 33. The top surface 33 is bounded by the leading and trailing surfaces 31 and 32. Each of the serrated portions 3 has an L-shaped step portion 3a at the corner between the leading and top surfaces 31 and 33. Welded to the step portion 3a is a blade chip 4 made of a super-abrasive material (PCD) having a super-hard alloy layer covered with a diamond sintered layer. As shown in Fig. 9, the blade chip 4 has a V-shaped operating surface 4a so that edges of a work W are chamfered when the disc-like body 1 is rotated about the axis C in the direction shown by the arrow D. Designated as 3b is a circumferentially extending recess formed on the top surface 33.

With this structure, however, the blade chip 4, which is engaged by the stepped portion only at its bottom and trailing faces, cannot sufficiently withstand a load acting thereon in the direction parallel with the rotational axis C of the disc 1. Thus, during the chamfering of the work W; the V-shaped operating surface 4a is apt to be torn at a bottom 4b thereof, especially when the length between the bottom 4b and the bottom face of the blade chip 4 becomes short as a result of repeated sharpening to produce a new sharp cutting edge.

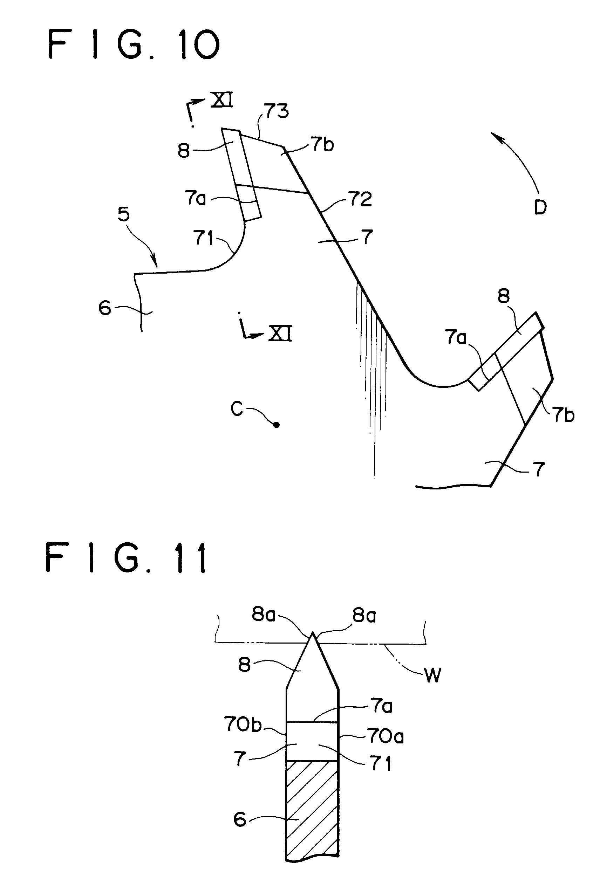

Figs. 10 and 11 depicts another known rotary tool for forming a groove on a surface of a work. The reference numeral 5 denotes a disc-like body having an axis of rotation C and a plurality of circumferentially spaced, serrated portions 7 each having opposed side faces 70a and 70b bounded by a leading surface 71, a trailing surface 72 and a top surface 73. The top surface 73 is bounded by the leading and trailing surfaces 71 and 72. Each of the serrated portions 7 has an L-shaped step portion 7a at the corner between the leading and top surfaces 71 and 73. Welded to the step portion 7a is a blade chip 8 made of a super-abrasive material (PCD). As shown in Fig. 11, the blade chip 8 has a ridge-shaped operating surface 7a so that a surface of a work W is trenched when the disc-like body 6 is rotated about the axis C in the direction shown by the arrow D.

With this structure, however, the blade chip 8, which is engaged by the stepped portion 7a only at its bottom and trailing faces, cannot sufficiently withstand a load acting thereon in the direction parallel with the rotational axis C of the disc 1. Thus, during the trenching of the work W, the blade chip 8 is apt to be detached from the stepped portion 7a.

### SUMMARY OF THE INVENTION

It is, therefore, an object of the present invention to provide a rotary tool which is devoid of the drawbacks of the conventional rotary tool.

In accordance with the present invention, there is provided a rotary tool comprising:
a disc-like body having an axis of rotation and a plurality of circumferentially spaced, serrated portions each having opposed side faces bounded by a leading surface, a trailing surface and a top surface, said top surface being bounded by said leading and trailing surfaces;
a radially extending recess formed between said opposed side faces of each of said serrated portions and opening to both said top and leading surfaces thereof; and
a blade insert fitted in and fixed to said recess of each of said serrated portions and having an operating surface so that, when said disc-like body is rotated about said axis, a work can be machined by contact with said operating surface of said blade insert of each of said serrated portions.

Since the blade insert is received in a recess not only by the bottom and rear walls thereof but also by opposing side walls thereof, the area of the contact between the blade insert and the recess is greatly increased. Further, the presence of the side walls of the recess can significantly improve resistance to a lateral load acting on the blade in the direction parallel with the rotational axis of the rotary tool. Additionally, even when the blade insert is cracked during operation, the presence of the side walls can prevent the scattering of the broken chips so that the machining operation can be carried out in a safe manner.

### BRIEF DESCRIPTION OF THE DRAWINGS

Other objects, features and advantages of the present invention will become apparent from the detailed description of the invention which follows, when considered in light of the accompanying drawings, in which:
Fig 1 is a fragmentary side view diagrammatically illustrating one embodiment of a rotary tool according to the present invention;
Fig. 2 is a sectional view taken along the line II-II in Fig. 1;
Fig. 3 is a sectional view, similar to Fig. 2, of another embodiment of a rotary tool according to the present invention;
Fig. 4 is a perspective view of a blade insert used in the rotary tool of Fig. 3;
Fig. 5 an explanatory view of the fabrication of the blade insert of Fig. 4;
Fig. 6 is a fragmentary side view diagrammatically illustrating a further embodiment of a rotary tool according to the present invention;
Fig. 7 is a sectional view taken along the line VII-VII in Fig. 6;
Fig. 8 is a fragmentary side view diagrammatically illustrating a conventional rotary tool;
Fig. 9 is a sectional view taken along the line IX-IX in Fig. 8;
Fig. 10 is a fragmentary side view diagrammatically illustrating another conventional rotary tool; and
Fig. 11 is a sectional view taken along the line XI-XI in Fig. 10.

### DETAILED DESCRIPTION OF THE PREFERRED EMBODIMENT OF THE INVENTION

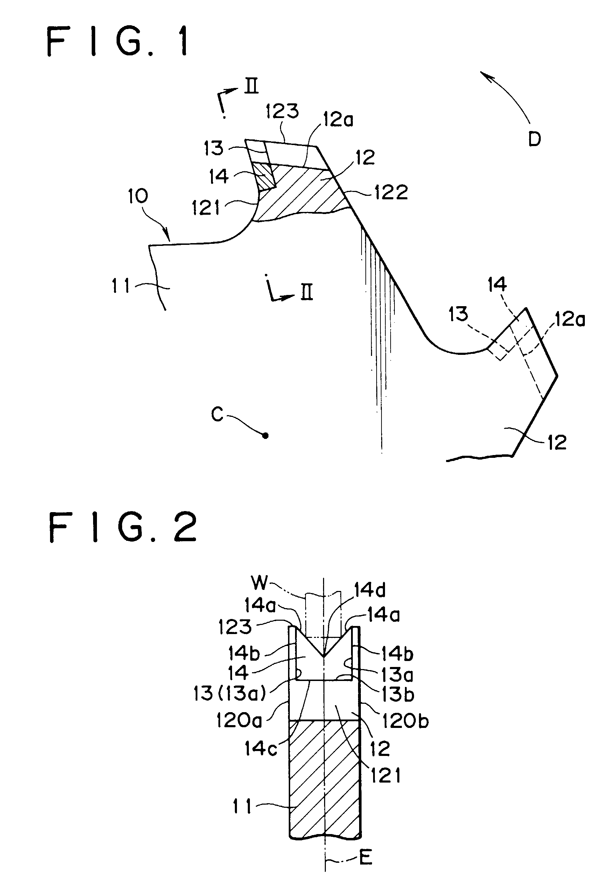

Referring now to Figs. 1 and 2, generally indicated by the reference numeral 10 is a rotary tool according to the present invention having a disc-like body 11. The disc-like body 11 has an axis of rotation C and a plurality of generally angularly equally spaced, serrated portions 12 each having opposed side faces 120a and 120b bounded by a leading surface 121, a trailing surface 122 and a top surface 123. The top surface 123 is bounded by the leading and trailing surfaces 121 and 123. The top surface 123 is provided with a circumferentially extending V-shaped groove 12a to discharge cut chips of a work. As used herein, the terms "leading" and "trailing" are intended to relate to the rotational direction of the disc-like body 11 as shown by the arrow D in Fig. 1.

A radially extending recess 13 is formed between the opposed side faces 120a and 120b of each of the serrated portions 12 and opening to both the top and leading surfaces 121 and 123 thereof. Thus, as best seen in Fig. 2, the recess 13 is defined between a pair of opposed, spaced side walls 13a and 13a extending in parallel with the side surfaces 120a and 120b and symmetrically arranged with respect to the plane E normal to the rotational axis C. The recess 13 has a bottom wall 13b bounded by the spaced side walls 13a and 13a and a rear wall extending generally in parallel with a tip portion of the leading surface 121.

Fitted in and fixed to the recess 13 is a blade insert 14 made of a super-abrasive material (PCD) having a super-hard alloy layer covered with a diamond sintered layer. As shown in Fig. 2, the blade insert 14 has a V-shaped operating surface (inwardly converging surfaces 14a and 14a) at its top, a pair of opposed side faces 14b and 14b, leading and trailing faces and a bottom face 14c. The bottom 14d of the V-shaped operating surface 14a is located on the symmetrical plane E.

Thus, when the blade insert 14 is fitted in the recess 13, the side faces 14b, bottom face 14c and the trailing face of the blade insert are engaged by the side walls 13a, the bottom wall 13b and the rear wall of the recess 13, respectively. The fixation of the blade insert to the recess may be done by, for example, welding. As a consequence of the above construction, edges of a work W are chamfered by contact with the operating surface 14a of the blade insert 14 of each of the serrated portions 12 when the disc-like body 11 is rotated about the axis C in the direction shown by the arrow D.

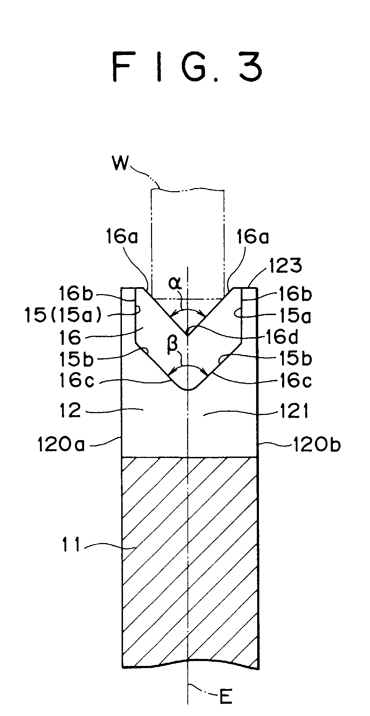

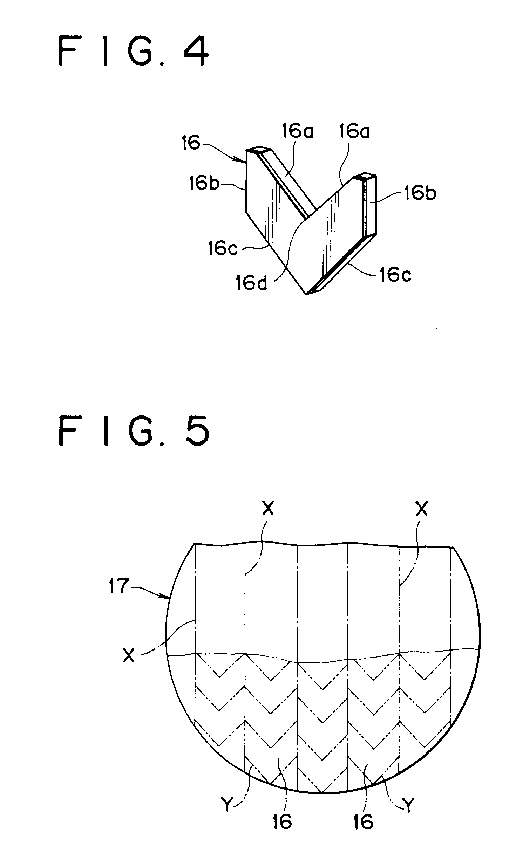

Fig. 3 illustrates a second embodiment of a rotary tool, in which the same reference numerals as those in Fig. 2 designate similar component parts. Designated as 16 is a blade insert having a V-shaped operating surface (inwardly converging surfaces 16a and 16a meeting at a bottom 16d) at its top, a pair of opposed side faces 16b and 16b, leading and trailing faces and an outwardly converging bottom faces 16c and 16c (see also Fig. 4). The blade insert 16 is fitted in a recess 15 having a V-shaped bottom wall 15b bounded by spaced side walls 15a and 15a and a rear, so that the side faces 16b, V-shaped bottom face 16c and the trailing face of the blade insert 16 are engaged by the side walls 15a, the V-shaped bottom wall 15b and the rear wall of the recess 15, respectively.

Preferably the angle α between the inwardly converging V-shaped operating surfaces 16a and 16a is the same as an angle β between outwardly converging bottom faces 16c and 16c (namely inwardly converging V-shaped bottom walls 15b and 15b) for reasons of facile production of many blade inserts. For example, as shown in Fig. 5, blade inserts may be manufactured by cutting a super-abrasive PCD disc along the lines X and Y using a wire cut electric discharge machine.

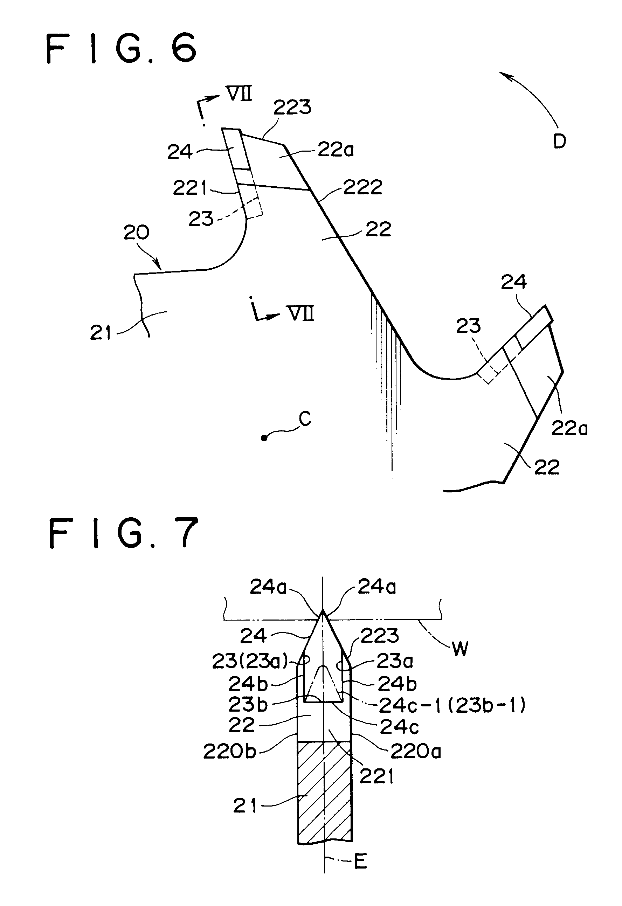

Figs. 6 and 7 illustrate a third embodiment of a rotary tool for forming a groove on a surface of a work according to the present invention. Generally indicated by the reference numeral 20 is a rotary tool having a disc-like body 21. The disc-like body 21 has an axis of rotation C and a plurality of generally angularly equally spaced, serrated portions 22 each having opposed side faces 220a and 220b bounded by a leading surface 221, a trailing surface 222 and a top surface 223. The top surface 223 is bounded by the leading and trailing surfaces 221 and 223.

A radially extending recess 23 is formed between the opposed side faces 220a and 220b of each of the serrated portions 22 and opening to both the top and leading surfaces 221 and 223 thereof. Thus, as best seen in Fig. 7, the recess 23 is defined between a pair of opposed, spaced side walls 23a and 23a extending in parallel with the side surfaces 220a and 220b and symmetrically arranged with respect to the plane E normal to the rotational axis C. The recess 23 has a bottom wall 23b bounded by the spaced side walls 23a and 23a and a rear wall extending generally in parallel with a tip portion of the leading surface 221.

Fitted in and fixed to the recess 23 is a blade insert 24 made of a super-abrasive material (PCD). As shown in Fig. 7, the blade insert 24 has a ridge-shaped operating surface (outwardly converging surfaces 24a and 24a) at its top, a pair of opposed side faces 24b and 24b, leading and trailing faces and a bottom face 24c. The tip of the ridge-shaped operating surface 24a is located on the symmetrical plane E.

Thus, when the blade insert 24 is fitted in the recess 23, the side faces 24b, bottom face 24c and the trailing face of the blade insert 24 are engaged by the side walls 23a, the bottom wall 23b and the rear wall of the recess 23, respectively. The fixation of the blade insert to the recess may be done by, for example, welding. As a consequence of the above construction, a groove may be formed on a surface of a work W by contact with the operating surface 24a of the blade insert 24 of each of the serrated portions 22 when the disc-like body 21 is rotated about the axis C in the direction shown by the arrow D.

In the third embodiment, the bottom face of the blade insert may be shaped into an inwardly converging shape 24c-1 as shown by the two-dotted line in Fig. 7, with a bottom wall 23b-1 of the recess 23 being correspondingly shaped into a protruded shape.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all the changes which come within the meaning and range of equivalency of the claims are therefore intended to be embraced therein.

## Claims

**1.** A rotary tool comprising:
a disc-like body having an axis of rotation and a plurality of circumferentially spaced, serrated portions each having opposed side faces bounded by a leading surface, a trailing surface and a top surface, said top surface being bounded by said leading and trailing surfaces;
a radially extending recess formed between said opposed side faces of each of said serrated portions and opening to both said top and leading surfaces thereof; and
a blade insert fitted in and fixed to said recess of each of said serrated portions and having an operating surface so that, when said disc-like body is rotated about said axis, a work can be machined by contact with said operating surface of said blade insert of each of said serrated portions.

**2.** A rotary tool as claimed in claim 1, wherein said operating surface is depressed from said top surface to have a V-shaped cross-section.

**3.** A rotary tool as claimed in claim 2, said recess has opposed side walls extending in parallel with said side faces and a V-shaped bottom wall bounded by said side walls, and wherein said blade insert is engaged by said side walls and said bottom wall.

**3.** A rotary tool as claimed in claim 1, wherein said operating surface is protruded from said top surface to form a ridge.

**5.** A rotary tool as claimed in claim 2, said recess has opposed side walls extending in parallel with said side faces and a ridge-like bottom wall bounded by said side walls, and wherein said blade insert is engaged by said side walls and said bottom wall.
